# EUROPÄISCHE PATENTSCHRIFT

(11) **EP 2 196 301 B1**
(45) Veröffentlichungstag und Bekanntmachung des Hinweises auf die Patenterteilung: **22.07.2015**
(21) Anmeldenummer: 08171364.6
(22) Anmeldetag: 11.12.2008
(51) Int. Cl.: B29C 51/26

(54) **Twinsheetrahmen**
Twin sheet frame
Cadre pour thermoformer deux feuilles

(43) Veröffentlichungstag der Anmeldung: 16.06.2010
(73) Patentinhaber: GEISS Aktiengesellschaft, 96145 Sesslach (DE)
(72) Erfinder: Geiss, Manfred, 96145, Sesslach (DE)
(74) Vertreter: Isarpatent

(56) Entgegenhaltungen:
- DE-A1- 4 117 197
- DE-C1- 4 223 785
- DE-C1- 4 225 027
- DE-C1- 4 416 344
- "Tabellenbuch Metall" 1978, VERLAG EUROPA-LEHRMITTEL , WUPPERTAL (DE) , XP002530141 ISBN 3-8085-1060-9 * Seite 143 *

## Beschreibung

Die vorliegende Erfindung betrifft einen Twinsheetrahmen mit wenigstens eine Twinsheetleiste sowie eine Thermoformmaschine.

Eine Twinsheetrahmen gemäß dem Oberbegriff des Patentanspruchs 1 ist beispielsweise aus der DE 42 23 785 C1 bekannt. Derartige Twinsheetrahmen werden in Thermoformmaschinen eingesetzt, um ein Twinsheetverfahren durchzuführen. Bei solchen Twinsheetverfahren werden zwei übereinander angeordnete Thermoplastzuschnitte bevorzugt gleichzeitig beheizt, verformt und miteinander verschweißt. Dabei entstehen doppelwandige, ringsum verschweißte Formteile, die gegenüber Monosheetteilen erhebliche Vorteile bieten, z.B. hinsichtlich Biege- und Torsionssteifigkeit.

Der Twinsheetleiste bzw. dem diese aufweisenden Twinsheetrahmen kommen dabei folgende Funktionen zu: Halten der beiden Thermoplastzuschnitte auf Distanz, so dass eine unbeabsichtigte Berührung dieser, insbesondere in deren plastifiziertem Zustand, vermieden wird; Dichtigkeit, so dass ein Stützen des oberen Thermoplastzuschnitts mittels eines in dem Raum zwischen den beiden Thermoplastzuschnitten und dem Rahmen herrschenden Überdrucks ermöglicht wird; und Entformbarkeit des gebildeten Formteils.

Herkömmlicherweise sind der obere und untere Thermoplastzuschnitt gleich groß. Es gibt nun aber Anwendungen, bei denen es wünschenswert ist, ein großes Formteil nur teilweise als Twinsheetteil und im Übrigen als Monosheetteil auszubilden. Werden dazu Twinsheetleisten eingesetzt, wie sie aus der DE 42 23 785 C1 bekannt sind, führt dies zu einer übermäßigen Verschwendung an Thermoplastmaterial, da die beiden Thermoplastzuschnitte nach wie vor gleich groß ausgebildet werden müssen, obwohl nur ein kleiner Teilbereich des einen, bevorzugt oberen Thermoplastzuschnitts zum Bilden des Twinsheetteils an dem ansonsten als Monoteil ausgebildeten Formteil benötigt wird.

Aufgabe der vorliegenden Erfindung ist es, einen Twinsheetrahmen mit wenigstens einer Twinsheetleiste und/oder eine Thermoformmaschine mit diesem Twinsheetrahmen bereitzustellen, welche bzw. welche die vorstehenden Nachteile vermeidet.

Diese Aufgabe wird durch einen Twinsheetrahmen mit den Merkmalen des Patentanspruchs 1 sowie durch eine Thermoformmaschine mit den Merkmalen des Patenanspruchs 8 gelöst.

Demnach wird ein Twinsheetrahmen einer Thermoformmaschine bereitgestellt, welche Folgendes aufweist: einen Leistengrundkörper; einen ersten Halteabschnitt, welcher für ein Einspannen einer ersten Kunststoffplatte zwischen diesem und einem ersten Gegenhalterabschnitt der Thermoformmaschine geeignet an dem Leistengrundkörper ausgebildet ist; einen von dem ersten Halteabschnitt in einer ersten Querrichtung des Leistengrundkörpers senkrecht zur Einspannebene der ersten Kunststoffplatte beabstandeten zweiten Halteabschnitt, welcher für ein Einspannen einer zweiten Kunststoffplatte zwischen diesem und einem zweiten Gegenhalterabschnitt der Thermoformmaschine geeignet an dem Leistengrundkörper ausgebildet ist; wobei sich die Halteabschnitte jeweils im Wesentlichen in Längsrichtung des Grundkörpers erstrecken; und wobei die Halteabschnitte in einer zweiten Querrichtung des Leistengrundkörpers im Wesentlichen senkrecht zur ersten Querrichtung versetzt zueinander angeordnet sind.

Weiterhin wird eine Thermoformmaschine mit wenigstens einem erfindungsgemäßen Twinsheetrahmen bereitgestellt.

Die der vorliegenden Erfindung zugrunde liegende Idee besteht darin, die Halteabschnitte der Twinsheetleiste zum gegenüberliegenden Haltern der ersten und zweiten Kunststoffplatte derart zueinander versetzt auszubilden, dass die zweite Kunststoffplatte kleiner als die erste Kunststoffplatte vorgesehen werden kann. Die Größe der zweiten Kunststoffplatte kann somit an die Größe des zu bildenden Twinsheetteils in dem ansonsten als Monoformteil (gebildet durch die erste Kunststoffplatte) ausgebildeten Formteil angepasst werden. Die Materialverschwendung kann somit stark reduziert werden. Außerdem kann der Gegenhalterabschnitt, welcher zusammen mit der Twinsheetleiste die kleinere, zweite Kunststoffplatte hält, kleiner ausgebildet werden. D.h., ein entsprechender Spannrahmen oder eine entsprechende Fensterplatte, welcher bzw. welche den Gegenhalterabschnitt aufweist, kann somit ebenfalls kleiner und damit kostengünstiger hergestellt werden.

Bevorzugte Ausgestaltungen und Weiterbildungen bzw. des Twinsheetrahmens bzw. der Thermoformmaschine ergeben sich aus den Unteransprüchen.

Mit "Einspannen" ist vorliegend insbesondere ein Fixieren mittels Klemmwirkung gemeint.

Mit "Einspannebene" ist vorliegend die Ebene gemeint, in welche sich die erste bzw. zweite Kunststoffplatte nach dem Einspannen derselben im Wesentlichen flächig erstreckt.

Mit "Längsrichtung des Leistengrundkörpers" ist vorliegend die Richtung des Leistengrundkörpers gemeint, in der er sich mit im Wesentlichen gleichbleibendem Querschnitt erstreckt.

Vorliegend sind die erste und zweite Querrichtung sowie die Längsrichtung jeweils in etwa senkrecht zueinander ausgerichtet. Unter "in etwa" ist vorliegend eine Abweichung von vorzugsweise weniger als 10 Grad zu verstehen.

Gemäß einer bevorzugten Weiterbildung des Twinsheetrahmens weist der Leistengrundkörper einen im Wesentlichen gekröpften, insbesondere doppelt gekröpften Querschnitt auf. Mit "doppelt gekröpft" ist vorliegend ein Querschnitt gemeint, welcher im Wesentlichen Z-förmig ausgebildet ist, wobei der die beiden Endabschnitte des Zs verbindende mittlere Abschnitt jedoch vorzugsweise im Wesentlichen senkrecht zu den Endabschnitte ausgerichtet ist. Die Endabschnitte des Zs weisen dabei vorzugsweise in eine Richtung senkrecht zur Einspannebene der ersten oder zweiten Kunststoffplatte. Die Halteabschnitte sind in diesem Falle vorzugsweise jeweils an den Enden der jeweiligen Endabschnitte des Zs bezogen auf eine Richtung senkrecht zur Einspannebene der ersten oder zweiten Kunststoffplatte angeordnet. Solche doppelt gekröpften Leistengrundkörper sind einfach herstellbar. Vorzugsweise ist der gekröpfte, insbesondere doppelt gekröpfte Querschnitt einstückig ausgebildet.

Gemäß einer weiter bevorzugten Weiterbildung des Twinsheetrahmens ist der erste und/oder zweite Halteabschnitt als ein Dichtabschnitt ausgebildet, gegen den die erste und/oder zweite Kunststoffplatte druckdicht anlegbar ist. Dies erlaubt es, einen Überdruck an den von der Twinsheetleiste und der ersten und zweiten Kunststoffplatte begrenzten Raum anzulegen, so dass ein Abstützen der typischerweise oberen, im Betrieb der Thermoformmaschine plastifizierten und damit weichen Kunststoffplatte ermöglicht wird.

Gemäß einer weiter bevorzugten Weiterbildung des erfindungsgemäßen Twinsheetrahmens ist der erste und/oder zweite Dichtabschnitt als eine Nut in dem Leistengrundkörper ausgebildet, in welcher eine Dichtung eingesetzt ist. Auf diese Weise kann der erste und/oder zweite Halteabschnitt sehr einfach und zuverlässig als Dichtabschnitt ausgebildet werden.

Gemäß einer weiter bevorzugten Weiterbildung des erfindungsgemäßen Twinsheetrahmens weist dieser eine Arbeitsstellung auf, in welcher die wenigstens eine Twinsheetleiste mit anderen Rahmenteilen einen in seiner Ebene im Wesentlichen geschlossenen, insbesondere dichten Rahmen bildet. Auch diese Ausgestaltung hat den Zweck, die Abstützfunktion zum Abstützen der typischerweise oberen, im Betrieb der Thermoformmaschine plastifizierten und deshalb weichen Kunststoffplatte mittels Überdruck in dem von dem Twinsheetrahmen und der ersten und zweiten Kunststoffplatte begrenzten Raum zu gewährleisten.

Gemäß einer weiter bevorzugten Weiterbildung des erfindungsgemäßen Twinsheetrahmens weisen die anderen Rahmenteile drei, jeweils ebenfalls erfindungemäß ausgebildete Twinsheetleisten auf. Es ist zweckmäßig, einen solchen Rahmen aus vier gleichartig ausgebildeten Twinsheetleisten auszubilden.

Gemäß einer weiter bevorzugten Weiterbildung des erfindungsgemäßen Twinsheetrahmens sind zwei der Twinsheetleisten als Längsleisten und zwei der Twinsheetleisten als Querleisten ausgebildet, wobei der Twinsheetrahmen eine Entnahmestellung aufweist, in welcher die Längsleisten jeweils und die Querleisten jeweils voneinander bezogen auf die Arbeitsstellung weiter voneinander beabstandet sind. Diese Entnahmestellung erlaubt ein Entnehmen (auch als "Entformen" bezeichnet) des hergestellten Formteils aus dem in der Arbeitsstellung formschlüssig mit dem Twinsheetrahmen in Eingriff stehenden Formteil aus dem Twinsheetrahmen.

Gemäß einer weiter bevorzugten Weiterbildung des erfindungsgemäßen Twinsheetrahmens ist dieser dazu ausgebildet, die erste und zweite Kunststoffplatte gegenüberliegend zueinander zu halten.

Gemäß einer weiter bevorzugten Weiterbildung der erfindungsgemäßen Thermoformmaschine sind weiterhin der erste und zweite Gegenhalterabschnitt vorgesehen, welche dazu ausgebildet sind, zusammen mit dem Twinsheetrahmen in dessen Arbeitsstellung, insbesondere zusammen mit dem ersten und zweiten Halteabschnitt der Twinsheetleiste, die erste und zweite Kunststoffplatte im Wesentlichen gegenüberliegend zueinander einzuspannen, wobei die erste und zweite Kunststoffplatte in ihrer jeweiligen Einspannebene unterschiedliche Abmessungen aufweisen. Dies erlaubt vorteilhaft ein gleichzeitiges Beheizen und Verformen der ersten und zweiten Kunststoffplatte sowie ein Verschweißen derselben miteinander.

Gemäß einer weiter bevorzugten Weiterbildung der erfindungsgemäßen Thermoformmaschine ist der erste Gegenhalterabschnitt Bestandteil eines Spannrahmens und/oder der zweite Gegenhalterabschnitt Bestandteil einer Fensterplatte. Ein beispielsweise geeigneter Spannrahmen ist in der DE 43 14 641 A1, eine beispielsweise geeignete Fensterplatte ist in der DE 44 24 845 A1 beschrieben (dort als "Abdeckplatte" bezeichnet).

Gemäß einer weiter bevorzugten Weiterbildung der erfindungsgemäßen Thermoformmaschine bilden in einem Plastifizierbetrieb der Thermoformmaschine die erste und zweite Kunststoffplatte einen druckdichten Raum zusammen mit dem Twinsheetrahmen in der Arbeitsstellung desselben. Dieser druckdichte Raum kann vorteilhaft im Plastifizierbetrieb mit Druck beaufschlagt werden, so dass die obere Kunststoffplatte im plastifizierten Zustand abgestützt wird, so dass sie sich nicht unter der Einwirkung der Schwerkraft ungewollt verformt.

Die erfindungsgemäße Thermoformmaschine ist vorzugsweise zur Ausführung eines Twinsheetverfahrens geeignet ausgebildet.

Die Erfindung wird im Folgenden anhand von Ausführungsbeispielen unter Bezugnahme auf die beiliegenden Figuren näher erläutert.

### Von den Figuren zeigen:

- Fig. 1: in einer Draufsicht einen Spannrahmen gemäß einem bevorzugten Ausführungsbeispiel der vorliegenden Erfindung; und
- Fig. 2: einen Teilschnitt A-A aus Fig. 1, wobei zusätzlich und beispielhaft ein Spannrahmen sowie eine Fensterplatte dargestellt sind.

In den Figuren bezeichnen gleiche Bezugszeichen gleiche oder funktionsgleiche Komponenten, soweit nichts Anderes angegeben ist.

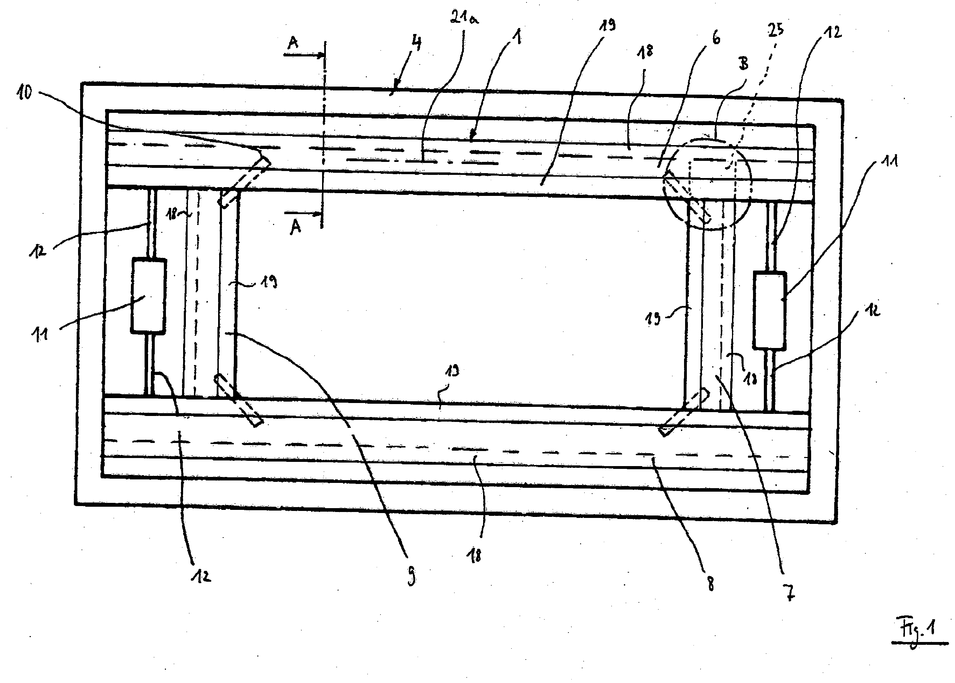

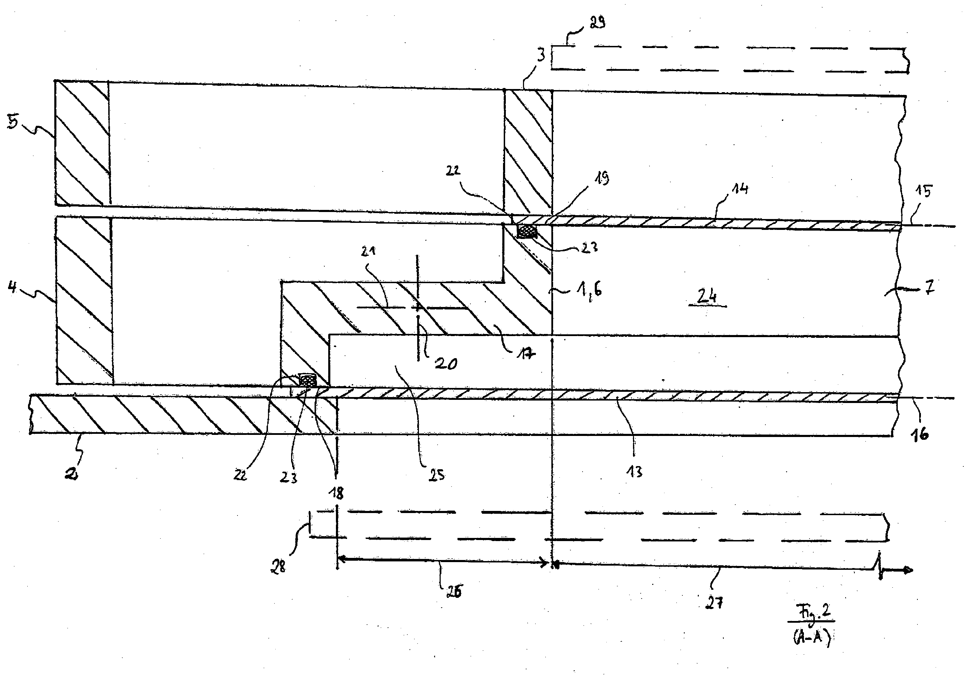

Fig. 1 zeigt einen Twinsheetrahmen 1 in einer Draufsicht gemäß einem bevorzugten Ausführungsbeispiel der vorliegenden Erfindung. Fig. 2 zeigt einen Teilschnitt A-A aus Fig. 1, wobei der Twinsheetrahmen 1 beispielhaft zwischen einer Fensterplatte 2 und einem Spannrahmen 3 in einer nicht weiter dargestellten Thermoformmaschine angeordnet ist.

Vorzugsweise werden der Twinsheetrahmen 1 und der Spannrahmen 3 jeweils in einem Trägerrahmen 4 bzw. 5 gehalten, wobei die Trägerrahmen 4, 5 den Twinsheetrahmen 1 bzw. den Spannrahmen 3 umgreifen. Der Twinsheetrahmen 1 (auch als "Distanzrahmen" bezeichnet) setzt sich vorzugsweise aus vier Twinsheetleisten 6, 7, 8 und 9 zusammen, wobei die Twinsheetleisten 6 und 8 Längsleisten und die Twinsheetleisten 7 und 9 Querleisten des Twinsheetrahmens 1 ausbilden. Vorzugsweise sind die Quer- und Längsleisten dabei in den vier Eckbereichen jeweils über einen in einem Winkel von etwa 45° verlaufenden Führungsbolzen 10 relativ zueinander beweglich verbunden. Zwei Bewegungsmechanismen, die beispielsweise als Druckzylinder 11 mit entsprechenden Schubstangen 12 ausgebildet sein können, sind vorzugsweise jeweils zwischen den beiden Längsleisten 6 und 8 angeordnet und dazu ausgebildet, diese zueinander hin für eine Arbeitsstellung des Twinsheetrahmens 1, wie in Fig. 1 und 2 gezeigt, und voneinander weg für eine Entnahmestellung des Twinsheetrahmens 1 (nicht dargestellt) zu bewegen. Das Auseinanderbewegen der Längsleisten 6 und 8 führt aufgrund der Wirkung der Führungsbolzen 10 dazu, dass sich gleichzeitig ebenfalls die Querleisten 7 und 9 auseinander bewegen, so dass ein in der Arbeitsstellung des Twinsheetrahmens 1 gebildetes Formteil (nicht dargestellt) aus dem Twinsheetrahmen 1 entnommen werden kann. Das vorstehende Prinzip ist bereits in der DE 42 23 785 C1 beschrieben worden.

Der Twinsheetrahmen 1 unterscheidet sich nun von dem aus der DE 42 23 785 C1 bekannten insbesondere dadurch, dass die Twinsheetleisten 6, 7, 8 und 9 eine spezielle Ausgestaltung aufweisen. Diese spezielle Ausgestaltung wird nachfolgend insbesondere im Zusammenhang mit Fig. 2 näher erläutert.

Fig. 2 zeigt eine geschlossene Stellung des Twinsheetrahmens 1, der Fensterplatte 2 und des Spannrahmens 3 in einem sogenannten Twinsheetverfahren, wobei zwischen der Twinsheetleiste 6 bzw. dem Twinsheetrahmen 1 und der Fensterplatte 2 eine erste Kunststoffplatte 13 und zwischen der Twinsheetleiste 6 bzw. dem Twinsheetrahmen 1 und dem Spannrahmen 3 eine zweite Kunststoffplatte 14 eingespannt ist. Bevorzugt ist die obere Kunststoffplatte, also vorliegend die Kunststoffplatte 14, mit bezogen auf ihre Einspannebene 15 kleineren Abmessungen vorgesehen als die Kunststoffplatte 13 bezüglich ihrer Einspannebene 16. Die Einspannebenen 15 und 16 liegen dabei vorzugsweise in etwa parallel zueinander.

Um eine derartige Anordnung und Dimensionierung der ersten und zweiten Kunststoffplatte 13 und 14 zu erlauben, weist die Twinsheetleiste 6 einen im Querschnitt doppelt gekröpften Leistengrundkörper 17 auf, dessen Enden einen ersten Halteabschnitt 18 und einen zweiten Halteabschnitt 19 bilden. Wie Fig. 1 zu entnehmen, erstrecken sich die Halteabschnitte 18 und 19 in der Längsrichtung 21a des Leistengrundkörpers 17. Der Halteabschnitt 18 hält zusammen mit der Fensterplatte 2 die Kunststoffplatte 13, während der Halteabschnitt 19 zusammen mit dem Spannrahmen 3 die Kunststoffplatte 14 hält. Dabei ist der Halteabschnitt 19 bezüglich des Halteabschnitts 18 in einer ersten Querrichtung 20 im Wesentlichen senkrecht zur Einspannebene 16 (genauso gut könnte auch die Einspannebene 15 als Referenz verwendet werden) beabstandet angeordnet. Ferner ist der Halteabschnitt 19 bezüglich des Halteabschnitts 18 in einer zweiten Querrichtung im Wesentlichen senkrecht zur ersten Querrichtung 20 beabstandet angeordnet. Weiter bevorzugt ist der Halteabschnitt 19 bezüglich des Halteabschnitts 18 in der Querrichtung 21 zur Mitte der Kunststoffplatte 13 hin versetzt angeordnet.

Um ein druckdichtes Einspannen der Kunststoffplatten 14 und 15 zu ermöglichen, sind die Halteabschnitte 18 und 19 jeweils vorzugsweise mit einer Nut 22 und darin angeordneter Dichtung 23 versehen. Somit kann in der in Fig. 2 dargestellten geschlossenen Stellung ein Druck in dem Raum 24 zum Abstützen der während des Twinsheetverfahrens plastifizierten, oberen Kunststoffplatte 14 aufgebaut werden.

Gemäß dem vorliegenden Ausführungsbeispiel wird es bevorzugt, dass die Längsleiste 8 sowie die Querleisten 7 und 9 ebenfalls den in Zusammenhang mit Fig. 2 für die Längsleiste 6 näher erläuterten Aufbau aufweisen.

In Fig. 1 ist ein Angrenzungsbereich zwischen der Twinsheetleiste 6 und der Twinsheetleiste 7 mit dem Bezugszeichen B gekennzeichnet. Eine beispielhafte Ausgestaltung dieses Angrenzungsbereich B wird nachfolgend stellvertretend für alle vier Angrenzungsbereiche zwischen den Längs- und Querleisten 6, 7, 8 und 9 näher erläutert.

Die zweiten, vorliegend oberen Halteabschnitte 19 grenzen allesamt, wie Fig. 1 zu entnehmen, in der Arbeitsstellung des Twinsheetrahmens direkt aneinander und bilden daher unproblematisch einen in seiner Ebene geschlossenen Rahmen, was sowohl für die Funktion des Einspannens als auch für die Dichtigkeit von Bedeutung ist.

Hinsichtlich der ersten, vorliegend unteren Halteabschnitte 18 kann jedoch eine Modifikation beispielsweise der Querleisten erforderlich sein, damit diese ebenfalls einen in seiner Ebene geschlossenen Rahmen ausbilden. Die Querleiste 7 ist daher mit einer entsprechenden Nase 25 vorgesehen, welche unter die Längsleiste 6 geführt ist und mit dieser in der Arbeitsstellung des Twinsheetrahmens einen in seiner Ebene geschlossenen, vorzugsweise druckdichten Rahmen bildet, vgl.
Fig. 1 und Fig. 2.

Mit der vorliegenden Erfindung kann somit einfach ein Formteil (nicht dargestellt) hergestellt werden, welches einen ersten als Monoteil ausgebildeten Abschnitt 26 und einen zweiten als Twinsheetteil ausgebildeten Abschnitt 27 aufweist. Das untere und obere Formwerkzeug der Thermoformmaschine zum Umformen der Kunststoffplatten 13 bzw. 14 sind in den Fig. 1 und 2 der Übersichtlichkeit halber lediglich schematisch dargestellt und mit den Bezugszeichen 28 bzw. 29 bezeichnet.

Alternativ zu der in Fig. 1 beschriebenen Ausgestaltung könnten die Längs- und Querleisten 6, 7, 8 und 9 jeweils an ihren Enden auf 45° abgeschrägt sein und entsprechend zum Bilden eines in seiner Ebene geschlossenen Twinsheetrahmens zusammengesetzt werden (Arbeitsstellung des Twinsheetrahmens). Ein derart gebildeter Twinsheetrahmen würde sich durch einen sehr einfachen Aufbau auszeichnen. Zur Entnahme des gebildeten Formteils aus einem derartigen Twinsheetrahmen müsste dann eine der Leisten aus dem Twinsheetrahmen entnommen werden, woraufhin dann das gebildete Formteil schubladenartig aus den anderen drei Rahmenteilen herausgezogen werden kann.

Alternativ zu dem doppelt gekröpften Querschnitt des Leistengrundkörpers 17 sind eine Vielzahl anderer Gestaltungen denkbar. Beispielsweise könnte auch ein Leistengrundkörper 17 vorgesehen werden, welcher sich - anhand des Ausführungsbeispiels gemäß Fig. 2 erläutert - schräg von dem Halteabschnitt 18 zu dem Halteabschnitt 19 (diagonal), beispielsweise mit einem Winkel von in etwa 10 bis 80°, je nach Anforderung, zur Einspannebene 15 oder 16 erstreckt.

Auch ist es nicht erforderlich, dass alle Twinsheetleisten 6, 7, 8, 9 die in der Querrichtung 21 zueinander versetzten Halteabschnitte 18 und 19 aufweisen. Je nach herzustellendem Formteil mag es auch zweckmäßig sein, nur eine, zwei oder drei der Twinsheetleisten erfindungsgemäß auszubilden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Auch könnte ein Twinsheetrahmen verwendet werden, welcher sich aus beispielsweise zwei halbkreisförmigen, erfindungsgemäßen Twinsheetleisten zusammensetzt und im zusammengesetzten Zustand der Twinsheetleisten einen kreisförmigen, vorzugsweise in seiner Ebene geschlossenen, insbesondere dichten Rahmen bildet.

### Bezugszeichenliste

- 1: Twinsheetrahmen
- 2: Fensterplatte
- 3: Spannrahmen
- 4: Trägerrahmen
- 5: Trägerrahmen
- 6: Längsleiste
- 7: Querleiste
- 8: Längsleiste
- 9: Querleiste
- 10: Bolzen
- 11: Druckzylinder
- 12: Schubstange
- 13: erste Kunststoffplatte
- 14: zweite Kunststoffplatte
- 15: zweite Einspannebene
- 16: erste Einspannebene
- 17: Leistengrundkörper
- 18: erster Halteabschnitt
- 19: zweiter Halteabschnitt
- 20: erste Querrichtung
- 21: zweite Querrichtung
- 21a: Längsrichtung
- 22: Nut
- 23: Dichtung
- 24: Raum
- 25: Nase
- 26: Monoteilabschnitt
- 27: Twinsheetteilabschnitt
- 28: unteres Formwerkzeug
- 29: oberes Formwerkzeug

## Patentansprüche

1. Twinsheetrahmen (1) mit wenigstens einer Twinsheetleisten (6, 7, 8, 9), welcher Folgendes aufweist:
einen Leis tengrundkörper (17);
einen ersten Halteabschnitt (18), welcher für ein Einspannen einer ersten Kunststoffplatte (13) zwischen diesem und einem ersten Gegenhalterabschnitt (2) der Triermoformmaschine geeignet an dem Leistengrundkörper (17) ausgebildet ist; und
einen von dem ersten Halteabschnitt (18) in einer ersten Querrichtung (20) des Leistengrundkörpers (17) senkrecht zur Einspannebene (16) der ersten Kunststoffplatte (13) beabstandeten zweiten Halteabschnitt (19), welcher für ein Einspannen einer zweiten Kunststoffplatte zwischen diesem und einem zweiten Gegenhalterabschnitt (3) der Thermoformmaschine geeignet an dem Leistengrundkörper (17) ausgebildet ist;
wobei sich die Halteabschnitte (18, 19) jeweils im Wesentlichen in Längsrichtung (21a) des Leistengrundkörpers (17) erstrecken;
**dadurch gekennzeichnet,**
**dass** die Halteabschnitte (18, 19) in einer zweiten Querrichtung (21) des Leistengrundkörpers (17) im Wesentlichen senkrecht zur ersten Querrichtung (20) versetzt zueinander angeordnet sind.

2. Twinsheetrahmen nach Anspruch 1,
**dadurch gekennzeichnet,**
**dass** der Leistengrundkörper (17) einen im Wesentlichen gekröpften, insbesondere doppelt gekröpften Querschnitt aufweist.

3. Twinsheetrahmen nach Anspruch 1 oder 2,
**dadurch gekennzeichnet,**
**dass** der erste und/oder zweite Halteabschnutt (18, 19) als ein Dichtabschnitt ausgebildet ist, gegen den die erste und/oder zweite Kunststoffplatte (13, 14) druckdicht anlegbar ist.

4. Twinsheetrahmen nach Anspruch 3,
**dadurch gekennzeichnet,**
**dass** der erste und/oder zweite Dichtabschnitt (13, 14) als eine Nut (22) in dem Leistengrundkörper (17) ausgebildet ist, in welche Dichtung (23) eingesetzt ist.

5. Twinsheetrahmen nach wenigstens einem der vorhergehenden Ansprüche,
**dadurch gekennzeichnet,**
**dass** dieser eine Arbeitsstellung aufweist, in welcher die wenigstens eine Twinsheetleiste (6) mit anderen Rahmenteilen (7, 8, 9) einen in seiner Ebene im Wesentlichen geschlossenen, insbesondere dichten Rahmen bildet.

6. Twinsheetrahmen nach Anspruch 5,
**dadurch gekennzeichnet,**
**dass** die anderen Rahmenteile (7, 8, 9) drei der Twinsheetlelsten aufweisen.

7. Twinsheetrahmen nach Anspruch 5 oder 6,
**dadurch gekennzeichnet,**
**dass** zwei der Twinsheetleisten als Längsleisten (6, 8) und zwei der Twinsheetleisten als Querleisten (7, 9) ausgebildet sind, wobei der Twinsheetrahmen (1) eine Entnahmestellung aufweist, in welcher die Längsleisten (6, 8) jeweils und die Querleisten (7, 9) jeweils voneinander bezogen auf die Arbeitsstellung weiter voneinander beabstandet sind.

8. Thermoformmaschine mit einem Twinsheetrahmen nach einem der Ansprüche 1 bis 7.

9. Thermoformmaschine nach Anspruch 8,
**dadurch gekennzeichnet,**
**dass** weiterhin der erste und zweite Gegenhalterabschnitt (2, 3) vorgesehen sind, welche dazu ausgebildet sind, zusammen mit dem Twinsheetrahmen (1) in dessen Arbeitsstellung die erste und zweite Kunststoffplatte (13, 14) im Wesentlichen gegenüberliegend zueinander einzuspannen, wobei die erste und zweite Kunststoffplatte (13, 14) in ihrer jeweiligen Einspannebene (15, 16) unterschiedliche Abmessungen aufweisen.

10. Thermoformmaschine nach Anspruch 8 oder 9,
**dadurch gekennzeichnet,**
**dass** der erste Gegenhalterabschnitt (2) Bestandteil eines Spannrahmens und/oder der zweite Gegenhalterabschnitt (3) Bestandteil einer Fensterplatte ist.

11. Thermoformmaschine nach Anspruch 10,
**dadurch gekennzeichnet,**
**dass** in einem Plastifizierbetrieb der Thermoformmaschine die erste und zweite Kunststoffplatte (13, 14) einen druckdichten Raum (24) zusammen mit dem Twinsheetrahmen (1) in der Arbeitsstellung desselben bilden.

## Claims

1. Twin-sheet frame (1) comprising at least one twin-sheet bar (6, 7, 8, 9) and having the following:
- a bar core (17);
- a first holding portion (18), which is formed suitably on the bar core (17) for clamping a first plastics material plate (13) between said first holding portion and a first counter holding portion (2) of the thermoforming machine; and
- a second holding portion (19), which is at a distance from the first holding portion (18) in a first transverse direction (20) of the bar core (17) perpendicular to the clamping plane (16) of the first plastics material plate (13), and which is formed suitably on the bar core (17) for clamping a second plastics material plate between said second holding portion and a second counter holding portion (3) of the thermoforming machine;
the holding portions (18, 19) each extending substantially in the longitudinal direction (21a) of the bar core (17);
**characterised in that**
the holding portions (18, 19) are arranged mutually offset in a second transverse direction (21) of the bar core (17) substantially perpendicular to the first transverse direction (20).

2. Twin-sheet frame according to claim 1,
**characterised in that**
the bar core (17) has a substantially elbowed, in particularly doubly elbowed cross section.

3. Twin-sheet frame according to either claim 1 or claim 2,
**characterised in that**
the first and/or second holding portion (18, 19) is formed as a sealing portion, against which the first and/or second plastics material plate (13, 14) can be applied in a pressure-tight manner.

4. Twin-sheet frame according to claim 3,
**characterised in that**
the first and/or second sealing portion (13, 14) is formed as a groove (22), into which a seal (23) is inserted, in the bar core (17).

5. Twin-sheet frame according to at least one of the preceding claims,
**characterised in that**
it has an operating position, in which the at least one twin-sheet bar (6), together with other frame parts (7, 8, 9), forms a frame, which is substantially closed in the plane thereof and is in particular tight.

6. Twin-sheet frame according to claim 5,
**characterised in that**
the other frame parts (7, 8, 9) comprise three of the twin-sheet bars.

7. Twin-sheet bar according to either claim 5 or claim 6,
**characterised in that**
two of the twin-sheet bars are formed as longitudinal bars (6, 8) and two of the twin-sheet bars are formed as transverse bars (7, 9), the twin-sheet frame (1) having a removal position in which the longitudinal bars (6, 8) are each and the transverse bars (7, 9) are each further away from one another than in the operating position.

8. Thermoforming machine comprising a twin-sheet frame according to any of claims 1 to 7.

9. Thermoforming machine according to claim 8,
**characterised in that**
the first and second counter holding portions (2, 3) are further provided, and are formed so as, together with the twin-sheet frame (1) in the operating position thereof, to clamp the first and second plastics material plate (13, 14) opposite one another, the first and second plastics material plates (13, 14) having different dimensions in the respective clamping planes (15, 16) thereof.

10. Thermoforming machine according to ether claim 8 or claim 9,
**characterised in that**
the first counter holding portion (2) is part of a clamping frame and/or the second counter holding portion (3) is part of a window plate.

11. Thermoforming machine according to claim 10,
**characterised in that**,
in a plasticising operation of the thermoforming machine, the first and second plastics material plates (13, 14) form a pressure-tight space (24) together with the twin-sheet frame (1) in the operating position thereof.

## Revendications

1. Cadre à double coque (1) comprenant au moins un rail à double coque (6, 7, 8, 9) et présentant les éléments suivants :
- un corps de base de rail (17) ;
- un premier segment de support (18) réalisé sur le corps de base de rail (17) et approprié pour serrer une première plaque en matière plastique (13) entre celui-ci et un premier segment de contre-support (2) de la thermoformeuse ; et
- un second segment de support (19) distant du premier segment de support (18) dans une première direction transversale (20) du corps de base de rail (17) perpendiculairement au plan de serrage (16) de la première plaque en matière plastique (13), lequel second segment étant réalisé sur le corps de base de rail (17) et approprié pour serrer une seconde plaque en matière plastique entre celui-ci et un second segment de contre-support (3) de la thermoformeuse ;
les segments de support (18, 19) s'étendant chacun sensiblement dans la direction longitudinale (21a) du corps de base de rail (17) ;
**caractérisé en ce que**
les segments de support (18, 19) sont disposés de manière décalés l'un par rapport à l'autre dans une seconde direction transversale (21) du corps de base de rail (17) sensiblement perpendiculairement à la première direction transversale (20).

2. Cadre à double coque selon la revendication 1, **caractérisé en ce que** le corps de base de rail (17) présente une section transversale sensiblement coudée, en particulier doublement coudée.

3. Cadre à double coque selon la revendication 1 ou 2,
**caractérisé en ce que** le premier et/ou second segment de support (18, 19) est réalisé sous la forme d'un segment d'étanchéité contre lequel la première et/ou seconde plaque en matière plastique (13, 14) peut reposer de manière étanche à la pression.

4. Cadre à double coque selon la revendication 3,
**caractérisé en ce que** le premier et/ou second segment d'étanchéité (13, 14) est réalisé sous la forme d'une rainure (22) dans le corps de base de rail (17), dans lequel un joint d'étanchéité (23) est inséré.

5. Cadre à double coque selon au moins une des revendications précédentes,
**caractérisé en ce qu'**il présente une position de travail, dans laquelle l'au moins un rail à double coque (6) forme avec d'autres parties de cadre (7, 8, 9) un cadre sensiblement fermé, en particulier étanche, dans son plan.

6. Cadre à double coque selon la revendication 5,
**caractérisé en ce que** les autres parties de cadre (7, 8, 9) présentent trois des rails à double coque.

7. Cadre à double coque selon la revendication 5 ou 6,
**caractérisé en ce que** deux des rails à double coque sont réalisés sous la forme de rails longitudinaux (6, 8) et deux des rails à double coque sont réalisés sous la forme de rails transversaux (7, 9), le cadre à double coque (1) présentant une position de prélèvement dans laquelle chacun des rails longitudinaux (6, 8) et chacun des rails transversaux (7, 9) sont en outre distants les uns des autres par rapport à la position de travail.

8. Thermoformeuse comprenant un cadre à double coque selon une des revendications 1 à 7.

9. Thermoformeuse selon la revendication 8,
**caractérisée en ce qu'**en outre des premier et second segments de contre-support (2, 3) sont prévus et réalisés pour serrer conjointement avec le cadre à double coque (1) dans sa position de travail la première et la seconde plaque en matière plastique (13, 14) sensiblement de manière opposée l'une par rapport à l'autre, la première et la seconde plaque en matière plastique (13, 14) présentant des dimensions différentes dans leur plan de serrage respectif (15, 16).

10. Thermoformeuse selon la revendication 8 ou 9,
**caractérisée en ce que** le premier segment de contre-suüpport (2) fait partie d'un cadre de serrage et/ou le second segment de contre-support (3) fait partie d'une plaque de fenêtre.

11. Thermoformeuse selon la revendication 10,
**caractérisée en ce que**, dans un fonctionnement de plastification de la thermoformeuse, la première et la seconde plaque en matière plastique (13, 14) forment un espace étanche à la pression (24) conjointement avec le cadre à double coque (1) dans la position de travail de celui-ci.
